# FASCICULE DE BREVET EUROPEEN

(11) **EP 2 468 631 B1**
(45) Date de publication et mention de la délivrance du brevet: **24.07.2013**
(21) Numéro de dépôt: 11194695.0
(22) Date de dépôt: 20.12.2011
(51) Int. Cl.: B64G 1/22

(54) **Articulation auto-motorisée et ensemble articulé auto-régulés**
Mit einem eigenen Motorantrieb ausgestattetes Gelenk, und automatisch regulierte Gelenkanordnung
Self-regulated self-motorised hinge and hinged assembly

(30) Priorité: 23.12.2010 FR 1005090
(43) Date de publication de la demande: 27.06.2012
(73) Titulaire: Thales, 92200 Neuilly Sur Seine (FR)
(72) Inventeur: Baudasse, Yannick, 06130 Grasse (FR); Vezain, Stéphane, 06210 Mandelieu (FR); Ducarne, Julilen, 06156 Cannes La Boca (FR)
(74) Mandataire: Collet, Alain

(56) Documents cités:
- EP-A2- 0 796 785
- EP-A2- 1 193 406
- WO-A2-01/06145
- FR-A1- 2 635 077
- FR-A1- 2 902 763
- US-A- 4 133 502

## Description

L'invention concerne une articulation auto-motorisée, conçue pour assurer à la fois le déploiement automatique d'éléments qu'elle relie ainsi que le verrouillage de ces éléments en position déployée. L'invention concerne également un ensemble articulé constitué de différents éléments reliés entre eux par au moins une articulation.

L'invention s'applique tout particulièrement mais non exclusivement au domaine spatial et notamment dans la fabrication des panneaux solaires de satellites qui sont formés de différents éléments articulés entre eux et dont le déploiement intervient dans l'espace. De nombreuses autres applications peuvent être envisagées aussi bien dans le domaine spatial que sur terre.

Une telle articulation est par exemple décrite dans les demandes de brevet FR 2 635 077 et FR 2 902 763. Cette articulation se présente sous la forme d'un système mécanique auto-motorisé permettant son ouverture et par voie de conséquence le déploiement des éléments qui lui sont reliés. L'articulation comprend deux ferrures entraînées en rotation sous l'action d'au moins un élément flexible. L'articulation est maintenue sans jeu au moyen de lames d'enroulement croisées autour des ferrures et maintenues sous tension grâce à deux rouleaux munis de pistes flexibles, appartenant chacun à une des ferrures. L'articulation comprend un dispositif de maintien en position dite stockée par exemple réalisé au moyen d'un boulon ou coupe tirant explosif positionné au niveau des panneaux solaires auxquels elle est rattachée.

L'élément flexible est par exemple formé par un joint de Carpentier exerçant un couple moteur pour faire passer l'articulation de sa position stockée à une position dite déployée. Le couple de motorisation est très irrégulier sur la course de l'articulation ce qui entraine une vitesse d'ouverture également irrégulière.

Par ailleurs, pour être certain d'atteindre la position déployée, il est nécessaire de surdimentionner l'élément flexible utilisé pour générer le couple de déploiement de l'articulation. On doit par exemple tenir compte des couples résistants dus, par exemple, aux câbles électriques situés entres les panneaux, et frottements inhérents à toute articulation. Le surdimensionnement entraine une restitution d'énergie en fin de déploiement sous forme de choc sur des butées de l'articulation. L'énergie absorbée par les butées est fonction de la vitesse d'impact, et est par conséquent difficilement prévisible. Le surdimensionnement de l'élément moteur de l'articulation entraine un surdimensionnement des butées de l'articulation ainsi que des éléments reliés par l'articulation qui subissent également des chocs en fin de déploiement.

L'invention vise à pallier tout ou partie des problèmes cités plus haut en proposant une articulation auto-motorisée dans laquelle la vitesse d'ouverture est régulée ce qui permet de réduire les effets de choc en fin d'ouverture même en cas de surdimensionnement important du couple de motorisation.

A cet effet, l'invention a pour objet une articulation auto-motorisée destinée à être montée entre deux éléments voisins, comprenant deux ferrures entraînées en rotation sous l'action d'au moins un élément de motorisation passif, caractérisée en ce que l'articulation comprend des moyens pour réguler la vitesse de son déploiement.

Une première des deux ferrures comprend une première surface destinée à rouler sans glissement en un point contre une seconde surface appartenant à une seconde des deux ferrures lors de la rotation de l'articulation. Les moyens pour réguler la vitesse du déploiement de l'articulation comprennent un canal flexible comprimé entre les deux surfaces en un point courant dit point de roulement. Le canal comprend une restriction située entre deux zones du canal séparées par le point de roulement et le canal contient un fluide dont la pression augmente en avant du point de roulement lors de la rotation des ferrures.

L'invention a également pour objet un ensemble articulé constitué de différents éléments reliés entre eux par une articulation selon l'invention.

L'invention sera mieux comprise et d'autres avantages apparaîtront à la lecture de la description détaillée d'un mode de réalisation donné à titre d'exemple, description illustrée par le dessin joint dans lequel :
la figure 1 représente un exemple d'une articulation selon l'invention, l'articulation étant en position « stockée » ;
la figure 2 représente l'articulation de la figure 1 en position « déployée » ;
la figure 3 représente schématiquement la cinématique de déploiement de l'articulation en configuration stockée ;
la figure 4 représente schématiquement la cinématique de déploiement de l'articulation en configuration déployée ;
la figure 5 représente schématiquement un premier mode de réalisation de moyens pour réguler la vitesse de déploiement de l'articulation ;
la figure 6 représente schématiquement un second mode de réalisation de moyens pour réguler la vitesse de déploiement de l'articulation ;
les figures 7A et 7B représentent des moyens pour maitriser la régulation de vitesse en fonction de la température, moyens adaptés au premier mode de réalisation ;
les figures 8A et 8B représentent des moyens pour maitriser la régulation de vitesse en fonction de la température, moyens adaptés au second mode de réalisation ;
les figures 9 à 12 représentent un autre exemple d'une articulation selon l'invention.

Par souci de clarté, les mêmes éléments porteront les mêmes repères dans les différentes figures.

Une articulation 10 selon l'invention comprend deux ferrures 12 et 14 constituées par exemple de deux blocs métalliques cylindriques usinés. Les ferrures 12 et 14 sont éventuellement allégées par des évidements lorsque l'application le justifie comme c'est notamment le cas dans le domaine spatial. Chacune des ferrures 12 et 14 est prévue pour être fixée sur un élément correspondant E1, E2 par tout moyen approprié tel que des vis ou des rivets au niveau d'ancrages 15.

L'articulation peut être équipée de roulements, de rotule ou de palier permettant le mouvement des deux ferrures 12 et 14 l'une par rapport à l'autre.

Chaque ferrure 12 et 14 comprend au moins une surface cylindrique flexible, respectivement 22 et 24 destinées à rouler l'une contre l'autre lors du mouvement de l'articulation. Dans l'exemple représenté, les diamètres des surfaces cylindriques 22 et 24 sont identiques.

Il est possible de réaliser l'articulation avec des surfaces de forme quelconque. Une des deux surfaces est avantageusement cylindrique pour rouler sur l'autre des deux surfaces. Le terme « cylindrique » doit être entendu au sens large. Le rayon du cylindre peut être variable, comme par exemple dans une came ou une spirale.

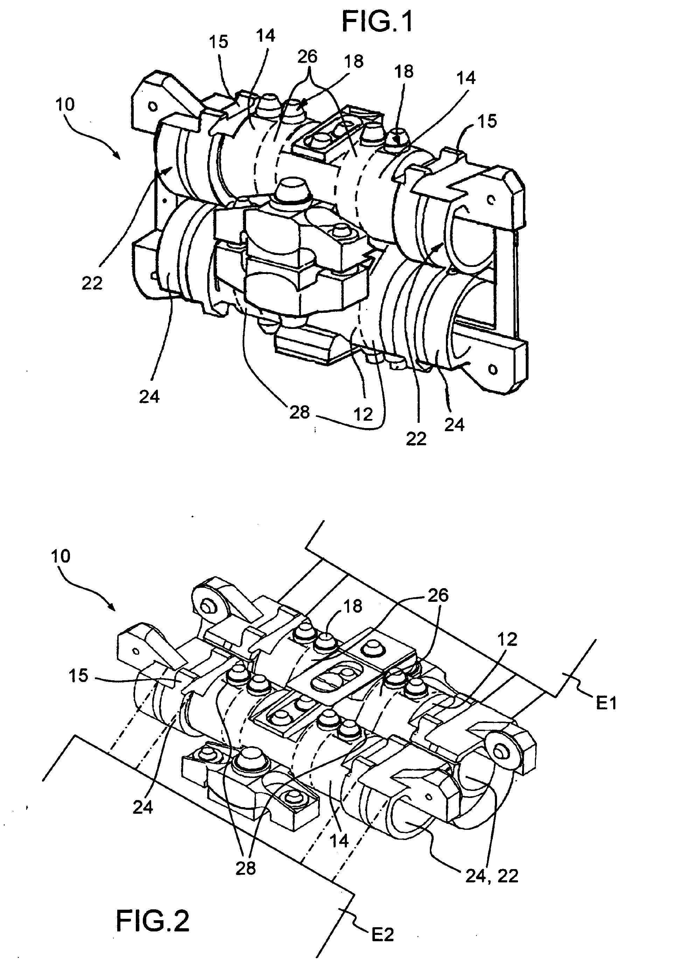

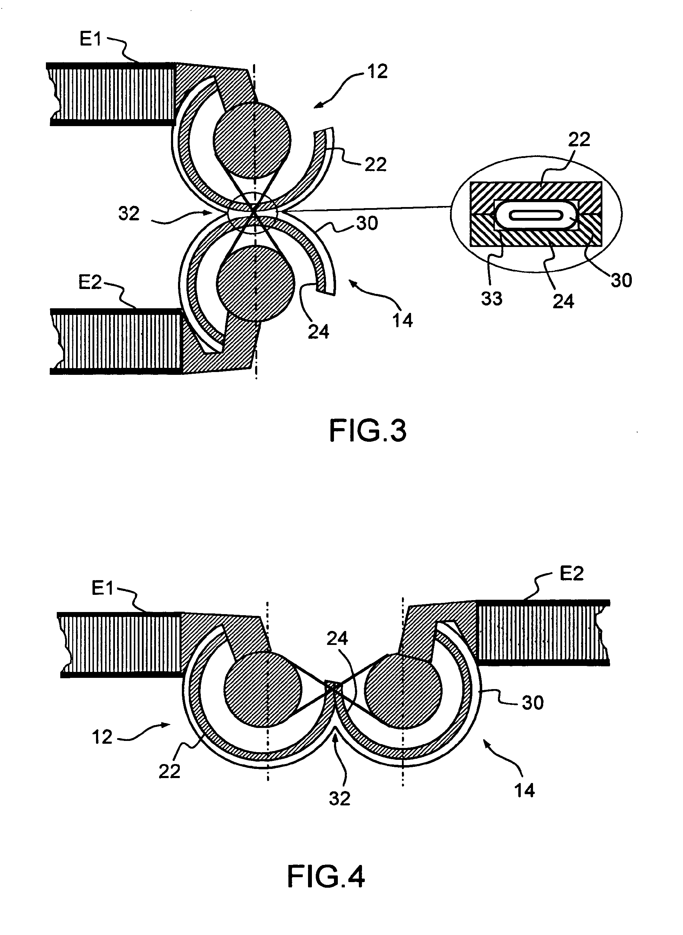

Les surfaces cylindriques flexibles 22 et 24 roulent l'une sur l'autre pour permettre aux éléments E1 et E2 de se déplacer entre deux positions extrêmes décalées de 180° l'une par rapport à l'autre. Lorsque les éléments E1 et E2 sont des éléments plans, la première de ces positions est dite repliée ou stockée, correspondant au cas où les éléments E1 et E2 sont repliés l'un contre l'autre et parallèles entre eux, alors que la deuxième position, dite position déployée, correspond au cas où ces éléments sont ouverts et disposés dans le même plan. Les figures 1 et 3 correspondent à la position stockée et les figures 2 et 4 correspondent à la position déployée.

Afin de maintenir en contact permanent les surfaces cylindriques flexibles 22 et 24 lors de leur roulement l'une contre l'autre, l'articulation 10 comprend de plus des lames métalliques flexibles 26 et 28 dont les extrémités sont fixées sur chacune de ferrures de façon à rouler sur les surfaces 22 et 24. Ces lames sont rigides dans leur plan et flexibles hors du plan. Elles sont réalisées par exemple en acier inoxydable. On les appelle lames d'enroulement ou lames de conduite.

A titre d'exemple l'articulation 10 comprend deux lames d'enroulement centrales adjacentes 26, disposées dans la partie centrale des ferrures 12 et 14 et enroulées dans le même sens sur les surfaces cylindriques 22 et 24 de part et d'autre d'un plan médian commun à ces ferrures. Une première extrémité de chacune des lames d'enroulement 26 est fixée directement de la ferrure 12. Cette fixation est assurée par exemple par des vis 18. A partir de cette extrémité les lames 26 passent entre les surfaces cylindriques 22 et 24 de façon à être successivement en contact avec la surface 22 puis avec la surface 24. Un mouvement de l'articulation 10 dans le sens du déploiement a donc pour effet de dérouler les lames d'une ferrure et simultanément de les enrouler sur la ferrure opposée.

Dans l'exemple illustré, l'articulation 10 comprend deux autres lames d'enroulement 28, fixées sur les parties extérieures des ferrures 12 et 14, à proximité de chacune des lames 26 (qui elles, sont fixées sur les parties intérieures de ferrures 12, 14) de façon également symétrique par rapport à un plan médian des ferrures. Les lames d'enroulement 28 sont enroulées en sens inverse des lames 26 sur les ferrures de sorte que les lames 26 et 28 se croisent sur des parties cylindriques des ferrures 12 et 14.

La motorisation de l'articulation 10 est par exemple assurée au moyen de bandes élastiques, masquées sur les différentes figures, et assurant le déploiement automatique de l'articulation ainsi que son verrouillage en position déployée. Un exemple de réalisation de telles bandes élastiques est décrit dans la demande de brevet FR 2 635 077.

Selon l'invention, l'articulation 10 comprend des moyens pour réguler la vitesse de son déploiement. Ces moyens sont par exemple formés par un canal flexible 30 qui peut être solidaire d'une des ferrures, en l'occurrence, la ferrure 14 et comprimé par l'autre ferrure 12. Le canal 30 est alors solidaire de la surface cylindrique 24 et la compression du canal 30 est réalisée au point de roulement 32 des deux surfaces cylindriques 22 et 24.

Le canal 30 comprend une restriction 34 située entre deux zones 36 et 38 du canal 30 séparées par le point de roulement 32. Afin de bien maitriser les dimensions de la restriction au point de roulement 32, une gorge 33 peut être usinée conjointement dans les surfaces cylindriques 22 et 24. Le canal 30 contient un fluide dont la pression augmente en avant du point de roulement 32 lors de la rotation des ferrures 12 et 14. La différence de pression entre les deux zones 36 et 38 augmente avec la vitesse de déplacement du point de roulement 32 le long du canal 30. Cette différence de pression génère un couple résistant dans la rotation des deux surfaces cylindriques 22 et 24. En conséquence, plus la vitesse de rotation augmente, plus le couple résistant augmente ce qui permet de réguler la vitesse de rotation des deux ferrures 12 et 14 l'une par rapport à l'autre.

Le fluide est par exemple liquide et la régulation de vitesse se fait par laminage du fluide dans la restriction 34. On choisit un fluide capable de rester liquide dans toutes les conditions de stockage et de fonctionnement de l'articulation 10. Dans le domaine spatial, on peut choisir un liquide à base d'alcool pouvant être utilisé dans une plage de température de l'ordre de - 100°C à + 100°C. Un fluide chargé en particules micro ou nanométriques peut également être utilisé pour ses propriétés épaississantes et amortissantes. On peut par exemple mettre en oeuvre des particules ferromagnétiques, des particules de dioxyde de titane, ou des nanotubes de carbone.

La restriction 34 peut être une simple réduction de section pratiquée dans le canal 30. Il est également possible de placer dans le canal un mousse ou un filtre générant une perte de charge lors de mouvements du fluide dans le canal 30.

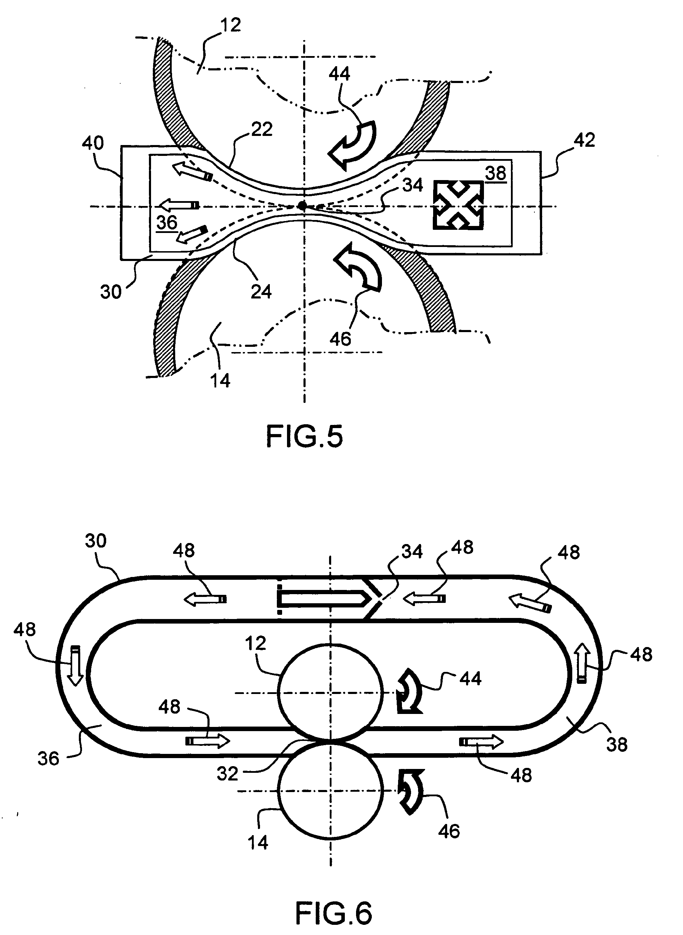

La figure 5 représente schématiquement un premier mode de réalisation de moyens pour réguler la vitesse de déploiement de l'articulation 10. Dans ce premier mode de réalisation, la restriction 34 est formée par la compression du canal 30 au point de roulement 32 de telle manière à ce que le fluide puisse y passer de manière contrainte. Des extrémités 40 et 42 du canal 30 sont obstruées. Lors de la rotation des deux ferrures 12 et 14 l'une sur l'autre, rotation représentée par des flèches 44 pour la ferrure 12 et 46 pour la ferrure 14, la pression du fluide augmente dans la zone 38 par rapport à celle de la zone 36. Le fluide tend à équilibrer les pressions des deux zones 36 et 38 en circulant dans la restriction 34. Une dimension caractéristique de la restriction 34, en l'occurrence sa section de passage du fluide, est donnée par la distance séparant les axes de rotation des deux surfaces cylindriques 22 et 24 ou par la profondeur de la gorge cylindrique 33 lorsque celle-ci est réalisée conjointement dans les surfaces cylindriques 22 et 24.

La figure 6 représente schématiquement un second mode de réalisation de moyens pour réguler la vitesse de déploiement de l'articulation 10. Dans ce second mode de réalisation, la restriction 34 est distincte du point de roulement 32 qui, dans l'exemple représenté, pince complètement le canal 30 et ne laisse pas le fluide passer. Les deux zones 36 et 38 sont disposées entre la restriction 34 et le point de roulement 32. Le canal 30 forme un circuit fermé. Le fluide est poussé dans le canal 30 par le déplacement du point de roulement 32 et son déplacement est représenté par des flèches 48.

Dans les figures 5 et 6, le canal 30 est représenté pincé entre les surfaces cylindriques 22 et 24 au point de roulement 32. Au voisinage de ce point, le canal 30 est rectiligne. Alternativement, le canal 30 peut être solidaire et enroulé autour d'une des surfaces cylindriques, comme représenté sur les figures 3 et 4.

Le couple résistant dans la rotation des deux surfaces cylindriques 22 et 24 l'une par rapport à l'autre est fonction de la viscosité du fluide. Cette viscosité évolue avec la température du fluide. Ceci est particulièrement sensible dans le domaine spatial où l'amplitude thermique peut être très importante. Généralement la viscosité est plus importante aux basses températures qu'aux températures plus élevées. La vitesse de l'articulation 10 augmente donc lors d'une élévation de la température. Pour réduire les effets des variations de la température sur la régulation de vitesse, l'articulation 10 peut comprendre des moyens pour faire varier une dimension caractéristique de la restriction 34 en fonction d'une variation de viscosité du fluide.

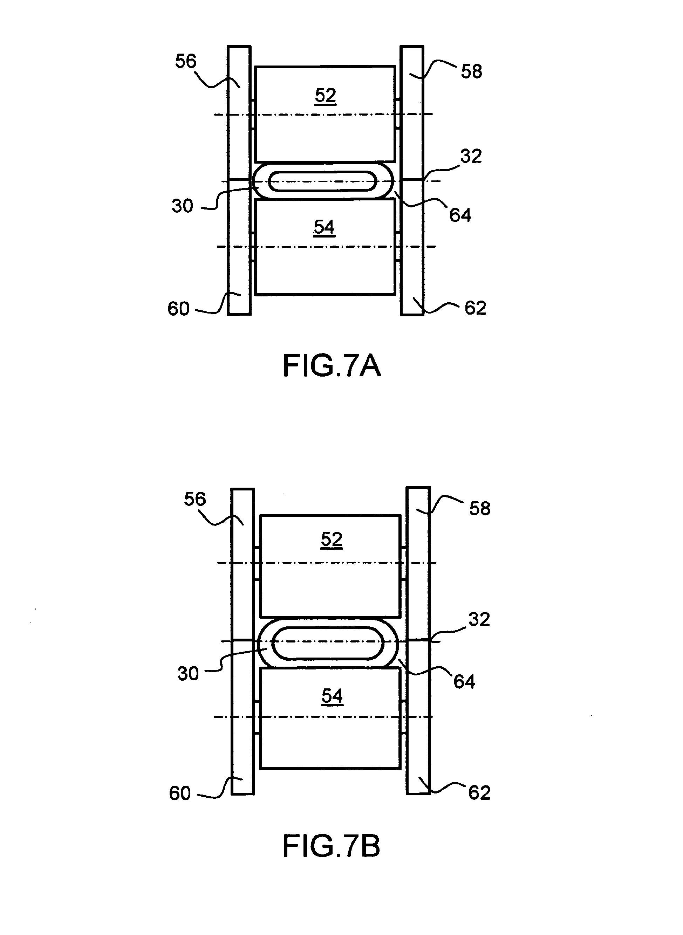

Les figures 7A et 7B représentent un exemple de ces moyens adapté au premier mode de réalisation représenté en figure 5. Plus précisément, les deux surfaces cylindriques 22 et 24 sont formées de rouleaux, respectivement 52 et 54, solidaires chacun de deux roues 56 et 58 pour le rouleau 52 et, 60 et 62 pour le rouleau 54. D'un coté des rouleaux 52 et 54, les roues 56 et 60 roulent l'une sur l'autre et de l'autre des rouleaux 52 et 54, les roues 58 et 62 roulent l'une sur l'autre. Les roues 56 et 58 ont un même diamètre qui est supérieur à celui du rouleau 52. De même, les roues 60 et 62 ont un même diamètre qui est supérieur à celui du rouleau 54. Ces différences de diamètre permettant de former un espace 64 entre les deux rouleaux 52 et 54 dans lequel est pincé le canal 30 pour former la restriction 34. En choisissant pour les rouleaux 52 et 54, d'une part et pour les roues 56 à 62 d'autre part, des matériaux dont les coefficients de dilatation thermique respectifs sont différents, on peut faire varier l'écartement des rouleaux 52 et 54, les dimensions de l'espace 64 et par voie de conséquence, la dimension caractéristique de la restriction 34. On choisit par exemple, pour les rouleaux 52 et 54 un matériau dont le coefficient de dilatation thermique est plus important que celui des roues 56 à 62. Ainsi à basse température, comme représenté sur la figure 7B, la dimension caractéristique de la restriction 34 est plus faible qu'à haute température comme représenté sur la figure 7A.

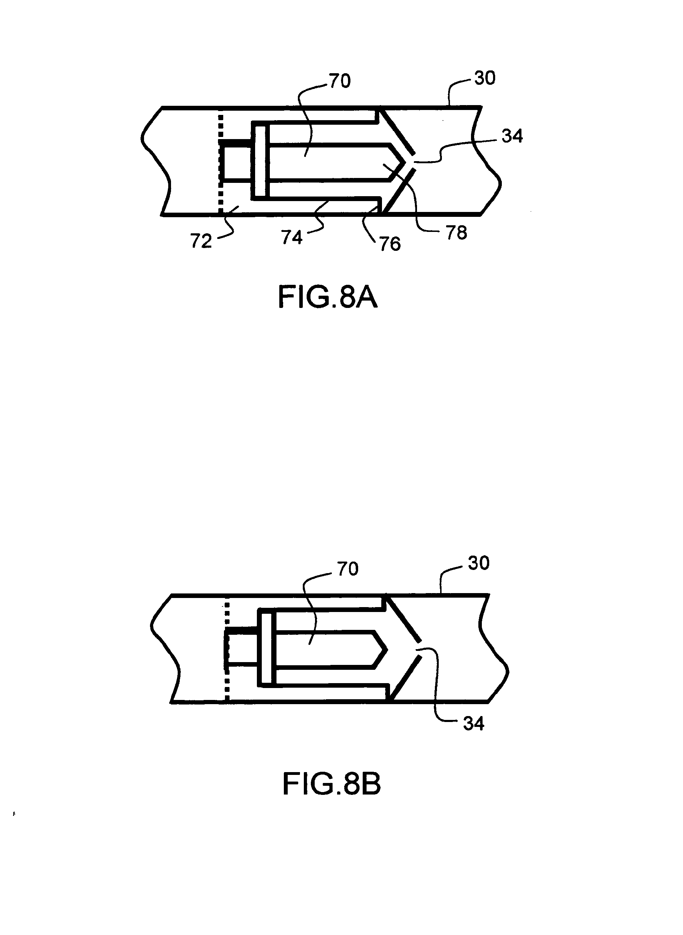

Les figures 8A et 8B représentent un autre exemple de moyens pour faire varier une dimension caractéristique de la restriction 34 adapté au second mode de réalisation représenté en figure 6. Plus précisément, la restriction 34 peut être en partie obstruée par un pointeau 70. Le pointeau est assemblé à une première extrémité 72 d'un support 74 solidaire du canal 30. La restriction 34 est, quant à elle, assemblée à une seconde extrémité 76 du support 74. Comme précédemment, en choisissant pour le pointeau 70 un matériau dont le coefficient de dilatation thermique est plus important que celui du support, on obtient un déplacement d'un nez 78 du pointeau 70 qui obstrue plus ou moins la restriction 34 en fonction des variations de température du fluide tel que représenté à haute température sur la figure 8A où la dimension caractéristique de la restriction 34 est réduite par rapport à la figure 8B, à plus basse température.

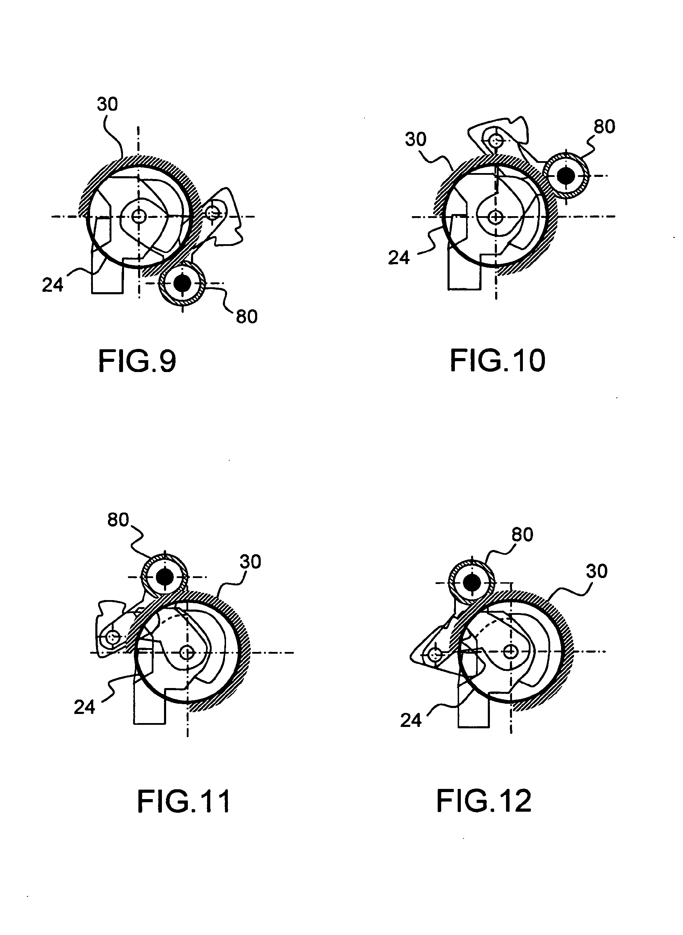

Les figures 9 à 12 représentent un autre exemple d'articulation comprenant des moyens pour réguler la vitesse de son déploiement.

Le canal 30 est solidaire de la surface cylindrique 24. Dans cet exemple, un galet 80 roule sans glisser sur la surface cylindrique 24. Le galet 80 a une section circulaire er un diamètre inférieur à celui de la surface cylindrique 24. Dans cet exemple il est possible d'utiliser un galet qui n'a pas de section circulaire, comme par exemple une came à rayon variable. Les figure 9 à 12 représentent l'articulation dans différentes positions depuis la position stockée en figure 9 jusqu'à la position déployée en figure 12.

## Revendications

1. Articulation auto-motorisée destinée à être montée entre deux éléments voisins (E1, E2), comprenant deux ferrures (12, 14) entraînées en rotation sous l'action d'au moins un élément de motorisation passif, une première (12) des deux ferrures comprenant une première surface (22) destinée à rouler sans glissement en un point contre une seconde surface (24) appartenant à une seconde (14) des deux ferrures lors de la rotation de l'articulation, **caractérisée en ce que** l'articulation comprend des moyens (30, 34) pour réguler la vitesse de son déploiement, **en ce que** ces moyens comprennent au moins un canal flexible (30) comprimé entre les deux surfaces (22, 24) en un point courant dit point de roulement (32), **en ce que** ce canal (30) comprend une restriction (34) située entre deux zones (36, 38) du canal (30) séparées par le point de roulement (32) et **en ce que** le canal (30) contient un fluide dont la pression augmente en avant du point de roulement (32) lors de la rotation des ferrures (12, 14).

2. Articulation selon la revendication 1, **caractérisée en ce que** le canal flexible (30) est solidaire de la seconde surface (24).

3. Articulation selon la revendication 2, **caractérisée en ce que** la première surface (22) est cylindrique.

4. Articulation selon la revendication 3, **caractérisée en ce que** la première surface cylindrique (22) a un rayon variable.

5. Articulation selon l'une des revendications précédentes, **caractérisée en ce que** la restriction (34) est formée par la compression du canal (30) au point de roulement (32) et **en ce que** des extrémités (40, 42) du canal (30) sont obstruées.

6. Articulation selon l'une quelconque des revendications 1 à 4, **caractérisée en ce que** le canal (30) forme un circuit fermé, et **en ce que** les deux zones (36, 38) sont disposées entre la restriction (34) et le point de roulement (32).

7. Articulation selon l'une des revendications précédentes, **caractérisée en ce qu'**elle comprend des moyens (52 à 62 ; 70, à 76) pour faire varier une dimension caractéristique de la restriction (34) en fonction d'une variation de viscosité du fluide.

8. Articulation selon la revendication 7, **caractérisée en ce que** les moyens (52 à 62 ; 70, à 76) pour faire varier une dimension caractéristique de la restriction (34) comprennent des matériaux dont les coefficients de dilatation thermique sont différents.

9. Ensemble articulé constitué de différents éléments (E1, E2) reliés entre eux par une articulation (10) selon l'une des revendications précédentes.

## Patentansprüche

1. Gelenk mit eigenem Motorantrieb, ausgelegt zur Montage zwischen zwei benachbarten Elementen (E1, E2), das zwei Beschläge (12, 14) umfasst, die unter der Wirkung von wenigstens einem passiven Motorelement in Drehung versetzt werden, wobei ein erster (12) der beiden Beschläge eine erste Fläche (22) aufweist, die so ausgelegt ist, dass sie bei der Rotation des Gelenks an einem Punkt gegen eine zweite Fläche (24), die zu einem zweiten (14) der beiden Beschläge gehört, rollt ohne zu gleiten, **dadurch gekennzeichnet, dass** das Gelenk Mittel (30, 34) zum Regeln der Geschwindigkeit seiner Ausbreitung umfasst, und dadurch, dass die Mittel wenigstens einen flexiblen Kanal (30) aufweisen, der zwischen den zwei Flächen (22, 24) an einem als Rollpunkt (32) bezeichneten laufenden Punkt komprimiert wird, dadurch, dass dieser Kanal (30) eine Verengung (34) aufweist, die sich zwischen zwei Zonen (36, 38) des Kanals (30) befindet, die durch den Rollpunkt (32) getrennt werden, und dadurch, dass der Kanal (30) ein Fluid enthält, dessen Druck vor dem Rollpunkt (32) zunimmt, wenn die Beschläge (12, 14) rotieren.

2. Gelenk nach Anspruch 1, **dadurch gekennzeichnet, dass** der flexible Kanal (30) einstückig mit der zweiten Fläche (24) ist.

3. Gelenk nach Anspruch 2, **dadurch gekennzeichnet, dass** die erste Fläche (22) zylindrisch ist.

4. Gelenk nach Anspruch 3, **dadurch gekennzeichnet, dass** die erste zylindrische Fläche (22) einen variablen Radius hat.

5. Gelenk nach einem der vorherigen Ansprüche, **dadurch gekennzeichnet, dass** die Verengung (34) durch die Kompression des Kanals (30) am Rollpunkt (32) gebildet wird, und dadurch, dass die Enden (40, 42) des Kanals (30) verschlossen sind.

6. Gelenk nach einem der Ansprüche 1 bis 4, **dadurch gekennzeichnet, dass** der Kanal (30) einen geschlossenen Kreislauf bildet, und dadurch, dass die zwei Zonen (36, 38) zwischen der Verengung (34) und dem Rollpunkt (32) angeordnet sind.

7. Gelenk nach einem der vorherigen Ansprüche, **dadurch gekennzeichnet, dass** es Mittel (52 bis 62; 70 bis 76) zum Variieren einer charakteristischen Abmessung der Verengung (34) in Abhängigkeit von einer Variation der Viskosität des Fluids umfasst.

8. Gelenk nach Anspruch 7, **dadurch gekennzeichnet, dass** die Mittel (52 bis 62; 70 bis 76) zum Variieren einer charakteristischen Abmessung der Verengung (34) Materialien mit unterschiedlichen Wärmeausdehnungskoeffizienten umfassen.

9. Angelenkte Baugruppe, die von verschiedenen Elementen (E1, E2) gebildet wird, die durch ein Gelenk (10) nach einem der vorherigen Ansprüche miteinander verbunden sind.

## Claims

1. A self-motorised hinge designed to be mounted between two neighbouring elements (E1, E2), comprising two fittings (12, 14) caused to rotate under the action of at least one passive motor element, a first (12) of said two fittings comprising a first surface (22) designed to roll without sliding at a point against a second surface (24) belonging to a second (14) of said two fittings during the rotation of said hinge, **characterised in that** said hinge comprises means (30, 34) for controlling the speed of its deployment, **in that** said means comprise at least one flexible channel (30) that is compressed between said two surfaces (22, 24) at a running point referred to as the rolling point (32), **in that** said channel (30) comprises a restriction (34) located between two zones (36, 38) of said channel (30) separated by said rolling point (32) and **in that** said channel (30) contains a fluid, the pressure of which increases ahead of said rolling point (32) when said fittings (12, 14) rotate.

2. The hinge according to claim 1, **characterised in that** said flexible channel (30) is integral with said second surface (24).

3. The hinge according to claim 2, **characterised in that** said first surface (22) is cylindrical.

4. The hinge according to claim 3, **characterised in that** said first cylindrical surface (22) has a variable radius.

5. The hinge according to any one of the preceding claims, **characterised in that** said restriction (34) is formed by the compression of said channel (30) at said rolling point (32) and **in that** the ends (40, 42) of said channel (30) are obstructed.

6. The hinge according to any one of claims 1 to 4, **characterised in that** said channel (30) forms a closed circuit, and **in that** said two zones (36, 38) are disposed between said restriction (34) and said rolling point (32).

7. The hinge according to any one of the preceding claims, **characterised in that** it comprises means (52 to 62; 70 to 76) for varying a characteristic dimension of said restriction (34) as a function of a variation in the viscosity of said fluid.

8. The hinge according to claim 7, **characterised in that** said means (52 to 62; 70 to 76) for varying a characteristic dimension of said restriction (34) comprise materials with different thermal expansion coefficients.

9. A hinged assembly constituted by various elements (E1, E2) connected together by a hinge (10) according to any one of the preceding claims.
